# EUROPEAN PATENT APPLICATION

(11) **EP 2 027 995 A1**
(43) Date of publication of application: **25.02.2009**
(21) Application number: 07018444.5
(22) Date of filing: 20.09.2007
(51) Int. Cl.: B32B 5/18, B32B 5/26, B32B 27/32, B60R 13/02

(54) **Base material for vehicle head liner**

(30) Priority: 18.07.2007 KR 20070071625
(71) Applicant: Doo Yang Industrial Co., Ltd., Seongnam-myeon Cheonan-si, Chungcheongnam-do (KR)
(72) Inventor: Park, Sung, Jung, Seocho-gu Seoul (KR)
(74) Representative: Sawodny, Michael-Wolfgang

(57) **Abstract**

A base material for a vehicle head liner that has high recyclability and excellent physical properties such as soundproof and heat resistance is disclosed. The base material includes a core sheet made of a polyolefine-based extrusion foam sheet, and reinforcing layers disposed on upper and lower portions of the core sheet and made of natural fiber and synthetic fiber.

## Description

### CROSS-REFERENCE TO RELATED APPLICATION

This application is based on and claims priority from Korean Patent Application No. 10-2007-71625, filed on July 18, 2007 in the Korean Intellectual Property Office, the disclosure of which is incorporated herein in its entirety by reference.

### BACKGROUND OF THE INVENTION

### Field of the invention

The present invention relates to a base material for a vehicle head liner, and more particularly, to a base material for a vehicle head liner that has high recyclability and excellent physical properties such as soundproof and heat resistance.

### Description of the Prior Art

Conventionally, a base material for a vehicle head liner comprises a resin felt, a board reinforced with natural fiber, a paper board, a wood fiber, hard polyurethane foam, and so forth.

The resin felt and the paper board are made by impregnation of a phenolic resin. The phenolic resin which is used as a curing agent is a kind of thermosetting resins prepared by condensation reaction of phenols and aldehydes. The phenolic resin has a drawback that phenol and aldehyde resulted from non-reaction or incomplete combustion in the incineration of the phenolic resin are regarded as toxic gas which is pollution material in the life environment comprising a working field.

In case of a conventional vehicle head lining comprising glass fiber or glass chop, glass dust generated in manufacturing and transferring processes has a harmful influence on workers, and an adhesive containing volatile organic solvent for bonding the material is also harmful to health.

Although the hard polyurethane foam has good heat resistance and light weight, its recyclability is bad, and it is liable to brittleness in a forming process of manufacturing the head lining, because of weak impact resistance.

The base material for the conventional vehicle head liner has the following drawbacks: its soudproofing effect is not excellent; it is relatively expensive and heavy; it is liable to deformation in prolonged use; it is harmful to health; and recycling of the material is difficult.

### SUMMARY OF THE INVENTION

Accordingly, the present invention has been made to solve the above-mentioned problems occurring in the prior art while advantages achieved by the prior art are maintained intact.

One object of the present invention is to provide a base material for a vehicle head liner capable of increasing the fuel efficiency due to the light weight.

Another object of the present invention is to provide a base material for a vehicle head liner which can be easily recycled when a vehicle is disused.

Still another object of the present invention is to provide a base material for a vehicle head liner having high strength and harmlessness for a human body.

In order to accomplish these objects, there is provided a base material for a vehicle head liner comprising a core sheet made of a polyolefine-based extrusion foam sheet. And reinforcing layers disposed on upper and lower portions of the core sheet and made of natural fiber and synthetic fiber.

The present invention relates to a base material for a vehicle head liner which employs the polyolefine-based extrusion foam sheet as a core sheet. The polyolefine-based extrusion foam sheet having superior extrusion stability is foam which is not molecularly and physical-chemically bonded, and has small cells of bubble shape. Also, since foaming of the polyolefine-based extrusion foam sheet is performed with 5 to 30 times, it is light. The polyolefine-based extrusion foam sheet is simply prepared relative to existing crosslinked foam, thereby reducing a manufacturing cost thereof. In addition, it has a superior dimensional stability. In particular, in comparison with the existing crosslinked foam, the polyolefine-based extrusion foam sheet is not harmful to a human body since chemical additives are not contained. The foam prepared by the method is environmentally-friendly material having superior formability and processability and being recyclable. The base material for a vehicle head liner is a laminated structure composed of the polypropylene extrusion foam sheet as a core sheet and the natural fiber and the synthetic fiber as a reinforcing member, so that soundproof and heat resistance characteristics are excellent.

### BRIEF DESCRIPTION OF THE DRAWINGS

The above and other objects, features and advantages of the present invention will be more apparent from the following detailed description taken in conjunction with the accompanying drawings, in which:
FIG. 1 is a view illustrating a conventional vehicle head liner;
FIG. 2 is a view illustrating a base material for a vehicle head liner according to an embodiment of the present invention; and
FIG. 3 is an enlarged view illustrating a vehicle head liner to which the base material structure according to the present invention is applied.

### DETAILED DESCRIPTION OF THE PREFERRED EMBODIMENTS

Hereinafter, preferred embodiments of the present invention will be described with reference to the accompanying drawings. The matters defined in the description, such as the detailed construction and elements, are nothing but specific details provided to assist those of ordinary skill in the art in a comprehensive understanding of the invention, and thus the present invention is not limited thereto.

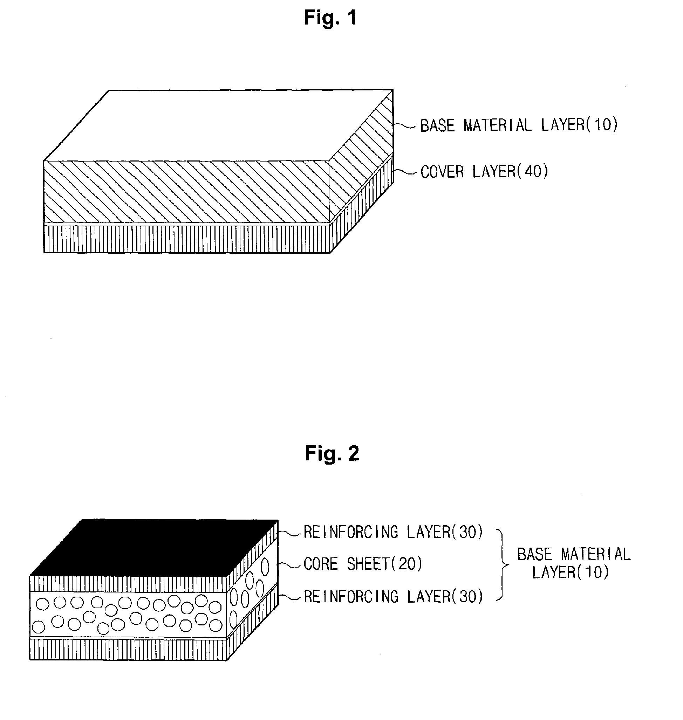

FIG. 1 is a view illustrating a conventional vehicle head liner. The head liner includes a base material layer 10 and a cover layer 11. FIG. 2 is a view illustrating a base material for a vehicle head liner according to an embodiment of the present invention. The head liner of the present invention includes a core layer 20 made of a polyolefine-based foam sheet and a reinforcing layer 30 made of natural fiber and synthetic resin.

Preferably, a main component of the core layer is polypropylene having high melt-tensile strength and polypropylene, and may comprise linear low density polyethylene, low-density polyethylene, high-density polyethylene, elastomer rubber component, and so forth.

Preferably, the foaming of the polyolefine-based extrusion foam sheet 20 which is used in the base material layer 10 according to an embodiment of the present invention is performed with 5 to 30 times. More specifically, if the foaming is performed with less than 5 times, the sound absorbing ability of the foam sheet 20 is deteriorated, and it becomes heavy. If the foaming is performed with more than 30 times, the sound absorbing ability is improved and it becomes light. However, shape stability thereof is deteriorated. Consequently, the foaming is performed with 10 to 20 times. Preferably, the polyolefine-based extrusion foam sheet has density of 0.1 g/cm 0.05 g/cm, and thickness of 3 to 10 mm, more preferably, 4 to 8 mm. Two polyolefine-based foam sheets which have thickness of 3 to 4 mm may be laminated to have a thickness of 6 to 8 mm. Preferably, the polyolefine-based extrusion foam sheet has a product width of 700 to 1600 mm. The polyolefine-based extrusion foam sheet is a non-cross linked sheet which is prepared by compressing and foaming physical chemical foaming agent using an extruder.

The base material 10 for a vehicle head liner according to an embodiment of the present invention includes a reinforcing layer 30 layered on both sides of the polyolefine-based extrusion foam sheet 20. The reinforcing layer 30 is made of natural fiber serving as a reinforcing member and synthetic fiber (e.g., polypropylene, PET or the like) serving as a binder. More specifically, polypropylene fiber of 30 to 70 weight percentage which serves as a binder is mixed with a natural fiber of 70 to 30 weight percentage which serves as a binder. Preferably, in a felt composition of the reinforcing layer, a mixing ratio of a synthetic fiber and a natural fiber is 30:70 to 70:30 in parts by weight.

If the polypropylene fiber serving as a binder is 30 parts by weight or less, the shape stability of the reinforcing layer is deteriorated, and it is difficult to form the base. If the polypropylene fiber is 70 parts by weight or more, a time for forming and preheating the base is extended, which reduces the productivity. Consequently, most preferably, a mixing ratio of the reinforcing layer is 40:60 to 60:40, or 50:50 in parts by weight. The mixing ratio is not specifically limited within a fixed range.

Preferably, the natural fiber of 40 to 120 µm in diameter and 40 to 80 mm in length is supplied. The natural fiber is scutched in a mixing process so that the diameter becomes 20 to 60 µm and the length becomes 3 to 15 mm. Preferably, the polyolefine-based fiber is 6 to 15 deniers in diameter and 40 to 80 mm in length.

Preferably, the reinforcing layer 30 has a thickness of 1 to 3 mm.

Also, some films or layers may be further formed on the reinforcing layer in order to reinforce the strength of the formed base and intercept harmful components. For example, a film having low gas permeability is further formed on the reinforcing layer to intercept odor generated from the natural fiber (e.g., odor resulted from carbonization of the natural fiber after base forming or moisture absorption or discharge of the natural fiber due to variation of atmosphere temperature or humidity), or a film of nylon, polyethylene, polypropylene, polyester or ethylene vinyl acetate may be further applied on one or both sides of the reinforcing layer to intercept harmful components resulted from an antiseptic substance (e.g., pretreatment agent pretreated to prevent mold, bacteria, or decay in the natural fiber during transporting the natural fiber for a long time).

The base material 10 for a vehicle head liner according to the present invention is made by introducing a foam layer between upper and lower fiber layers, for example, through heat lamination or needle punching process.

Therefore, the base material for a vehicle head liner according to the present invention has a multilayered structure in which the upper fiber layer, the foam layer, and the lower fiber layer are bonded to each other by an adhesive or heat lamination.

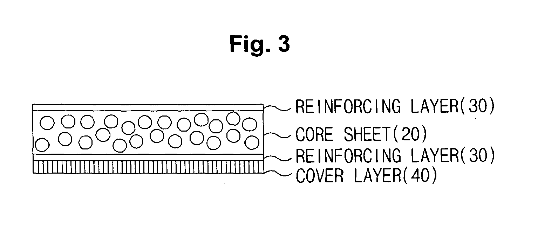

Referring to FIG. 3, a cover layer 40 is laminated on the portion of the reinforcing layer 30 laminated on one or both sides of the polyolefine-based extrusion foam sheet 20 which is adhered to a vehicle roof. The cover layer 40 is made of polyolefine-based nonwoven fabric or polyester-based nonwoven fabric. Also, polyurethane foam and polyolefine-based foam may be laminated onto a nonwoven fabric.

As described, according to the present invention, the vehicle head liner made by laminating the reinforcing layer 30 and the cover layer 40 together with the polyolefine-based extrusion foam sheet 20 as a core sheet is processed by a mold as shown in FIG. 3. The base material 10 for a vehicle head liner has excellent dimensional stability and strength.

Since the polyolefine-based extrusion foam sheet 20 is the same material as the nonwoven fabric used as the cover layer 40, the cover layer 40 and the core sheet are not separated when scrapping a car, which can save resources and be environment friendly.

With the above description, the base material for a vehicle head liner is a laminated structure composed of the polypropylene extrusion foam sheet as a core sheet and the natural fiber and the synthetic fiber as a reinforcing member, so that shape stability, soundproof and heat resistance characteristics are excellent, and the strength is very high. Therefore, it prefers to a head liner of a vehicle lining structure.

In case that the vehicle lining structure is made of the polyolefine-based material, it is easily recycled when the vehicle is disused.

Although preferred embodiments of the present invention have been described for illustrative purposes, those skilled in the art will appreciate that various modifications, additions and substitutions are possible, without departing from the scope and spirit of the invention as disclosed in the accompanying claims.

## Claims

1. A base material for a vehicle head liner comprising:
a core sheet made of a polyolefine-based extrusion foam sheet; and
reinforcing layers disposed on upper and lower portions of the core sheet and made of natural fiber and synthetic fiber.

2. The base material of claim 1, wherein the polyolefine is polypropylene having high melt-tensile strength or polypropylene.

3. The base material of claim 1, wherein the polyolefine comprises at least one selected from the group consisting of linear low density polyethylene, low-density polyethylene, high-density polyethylene, and elastomer rubber component.

4. The base material of claim 1, wherein the polyolefine-based extrusion foam sheet has a width of 700 to 1600 mm.

5. The base material of claim 1, wherein the polyolefine-based extrusion foam sheet is a non-crosslinked foam sheet which is prepared by physical or chemical foaming agent using an extruder.

6. The base material of claim 1, wherein foaming of the polyolefine-based extrusion foam sheet is performed with 5 to 30 times, and has a thickness of 3 to 10 mm.

7. The base material of claim 1, wherein the polyolefine-based extrusion foam sheet prepared by laminating two foam sheets having a thickness of 3 to 4 mm to have a thickness of 6 to 8 mm.

8. The base material of claim 1, wherein a mixing ratio of the polyolefine-based fiber and the natural fiber is 30:70 to 70:30 in parts by weight, and the reinforcing layer has a thickness of 1 to 3 mm.

9. The base material of claim 1, wherein the natural fiber comprises at least one selected from the group consisting of jute, kenaf and sisal.

10. The base material of claim 1, wherein the synthetic fiber comprises at least one selected from the group consisting of low-melting point polyester, polyester and polypropylene.
